# FASCICULE DE BREVET EUROPEEN

(11) **EP 3 750 812 B1**
(45) Date de publication et mention de la délivrance du brevet: **04.08.2021**
(21) Numéro de dépôt: 20168362.0
(22) Date de dépôt: 07.04.2020
(51) Int. Cl.: B64D 27/26, B64D 27/18

(54) **ENSEMBLE DE MOTORISATION D'AÉRONEF COMPRENANT UNE ATTACHE MOTEUR ARRIÈRE**
MOTORISIERUNGSEINHEIT EINES LUFTFAHRZEUGS, DIE EINE HINTERE MOTORBEFESTIGUNG UMFASST
AIRCRAFT ENGINE ASSEMBLY COMPRISING A REAR ENGINE MOUNT

(30) Priorité: 14.06.2019 FR 1906365
(43) Date de publication de la demande: 16.12.2020
(73) Titulaire: AIRBUS OPERATIONS (S.A.S.), 31060 Toulouse (FR)
(72) Inventeur: BERJOT, Michael, 31060 TOULOUSE Cedex 9 (FR); LABARTHE, Christophe, 31060 TOULOUSE Cedex 9 (FR); PANTEL, Aurélien, 31060 TOULOUSE Cedex 9 (FR)
(74) Mandataire: Gicquel, Olivier Yves Gérard

(56) Documents cités:
- FR-A1- 3 073 205
- US-A- 5 078 342
- US-A- 5 620 154

## Description

La présente demande se rapporte à un ensemble de motorisation d'aéronef comprenant une attache moteur arrière.

Un aéronef comporte classiquement une aile sous laquelle est fixé un ensemble de motorisation comprenant un mât fixé sous l'aile et une turbomachine comportant une nacelle de forme cylindrique qui entoure un moteur suspendu et fixé au mât au moyen d'un système d'attaches moteur.

Le système d'attache moteur est constitué entre autres à l'avant par une attache moteur avant et à l'arrière par une attache moteur arrière.

On connait du document EP2500268, une attache moteur arrière qui comprend une poutre transversale ayant une première face fixée à une face inférieure du mat, et une seconde face, opposée à la première face, fixée au moteur au travers d'une première manille latérale, au travers d'une seconde manille latérale ainsi que directement via un axe de liaison moteur central situé entre les deux manilles latérales.

La première manille latérale est fixée au moteur par un premier axe de liaison moteur latéral et à la poutre transversale par deux axes de liaison poutre tandis que la deuxième manille est fixée au moteur par un deuxième axe de liaison moteur latéral et à la poutre transversale par un axe de liaison poutre.

Les trois axes de liaison poutre par lesquelles les première et deuxième manilles sont reliées à la poutre transversale sont espacés et approximativement alignés avec l'axe de liaison moteur central selon une direction transversale horizontale. Cet agencement conduit à un encombrement important selon la direction transversale.

On connaît également le brevet US5078342 qui décrit une attache moteur telle que décrite dans le préambule de la revendication 1.

Aussi, bien que des telles attaches moteur donnent entière satisfaction, il existe un besoin de trouver une attache moteur arrière compacte selon la direction transversale afin de pouvoir réduire la dimension transversale de la face inférieure du mat dans le but d'optimiser les performances aérodynamiques de ce dernier.

La présente invention vise à répondre en tout ou partie à ce besoin. A cet effet, l'invention a pour objet un ensemble de motorisation tel que revendiqué dans la revendication 1.

L'attache moteur arrière selon l'invention permet, et ce de manière similaire pour chaque côté du plan vertical, d'engager un point de liaison supplémentaire proche d'un point de liaison principal rompu afin de maximiser le bras de levier pour la reprise du couple moteur au niveau de l'axe de liaison support.

Les diamètres des axes des liaisons supports peuvent, par conséquent, être optimisés afin de réduire leur encombrement. Par conséquent, il est possible de réduire les dimensions du support selon la direction transversale et par conséquent la largeur de la face inférieure du mat dans le but d'optimiser les performances aérodynamiques de ce dernier.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- La figure 1 est une vue schématique de côté d'un ensemble de motorisation selon l'invention, ledit ensemble comprenant une attache moteur avant et une attache moteur arrière pour fixer un moteur au mât ;
- La figure 2 est une vue de face d'un attache moteur arrière selon un premier mode de réalisation de l'invention ;
- La figure 3 est une vue en perspective de l'attache moteur arrière de la figure 2 ;
- La figure 4 est une vue en perspective en éclaté de l'attache moteur arrière représentée à la figure 2 ; et
- La figure 5 est une vue en perspective en éclaté d'une attache moteur arrière selon un second mode de réalisation de l'invention.

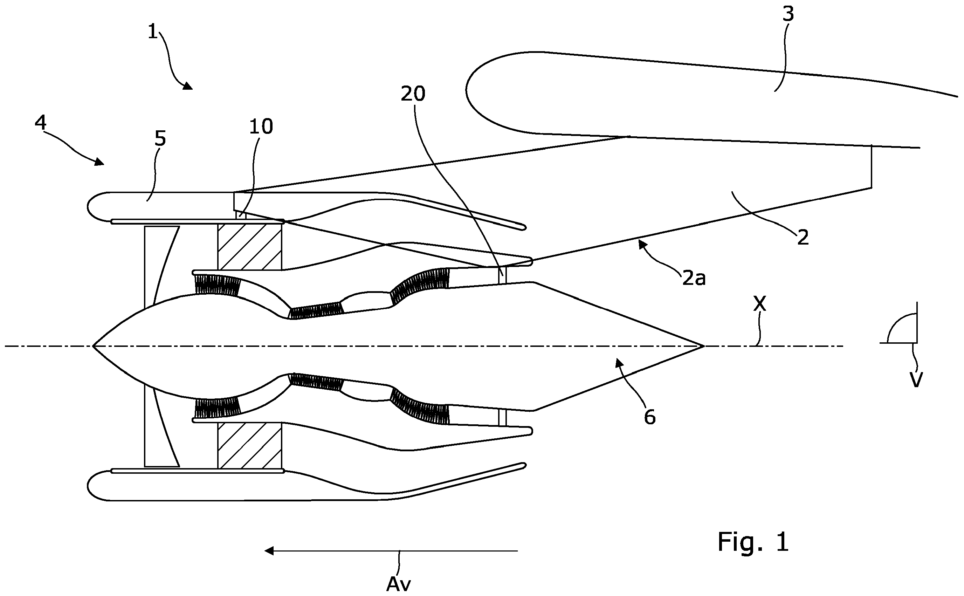

En relation avec la figure 1, un ensemble de motorisation 1 comporte un mât 2 fixé sous l'aile 3 d'un aéronef et une turbomachine à double flux 4 comportant une nacelle 5 de forme cylindrique s'étendant autour d'un axe longitudinal X et qui entoure un moteur 6 suspendu et fixé au mât 2.

Le mât 2 présente une face inférieure 2a qui est plane et orientée vers le sol.

Dans la description, les termes relatifs à une position sont pris en référence par rapport la flèche Av représentant la direction d'avancement de l'ensemble de motorisation-aile dans l'air sous l'effet de la poussée fournie par la turbomachine 4. On appelle plan vertical V, le plan longitudinal orthogonal au sol et parallèle à l'axe longitudinal X qui divise le moteur en deux parties symétriques gauche et droite. On désigne par plan transversal, un plan orthogonal à l'axe longitudinal X, et par direction transversale, une direction dans un plan transversal.

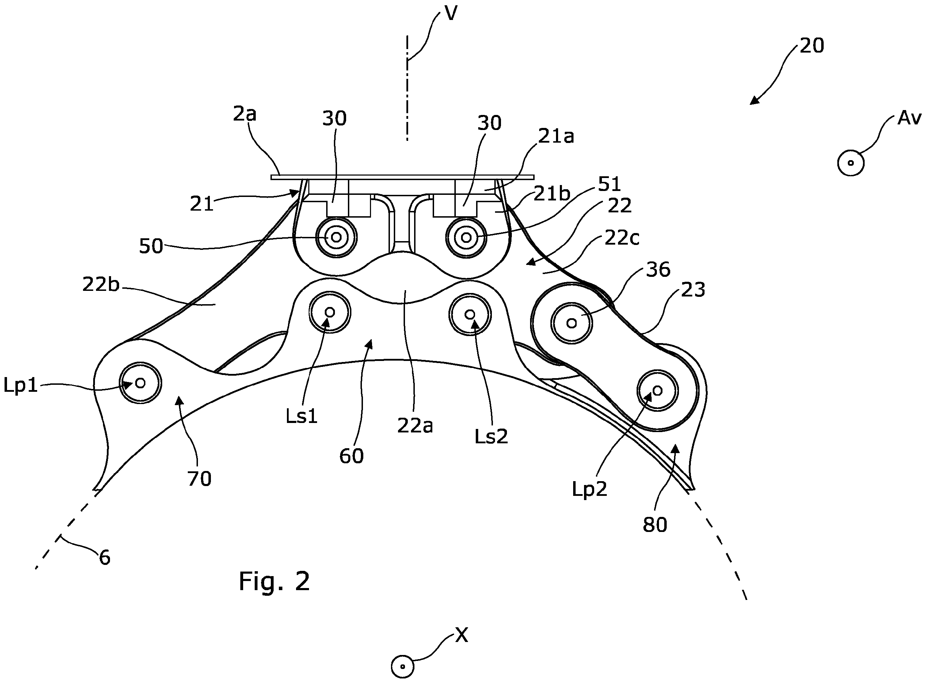

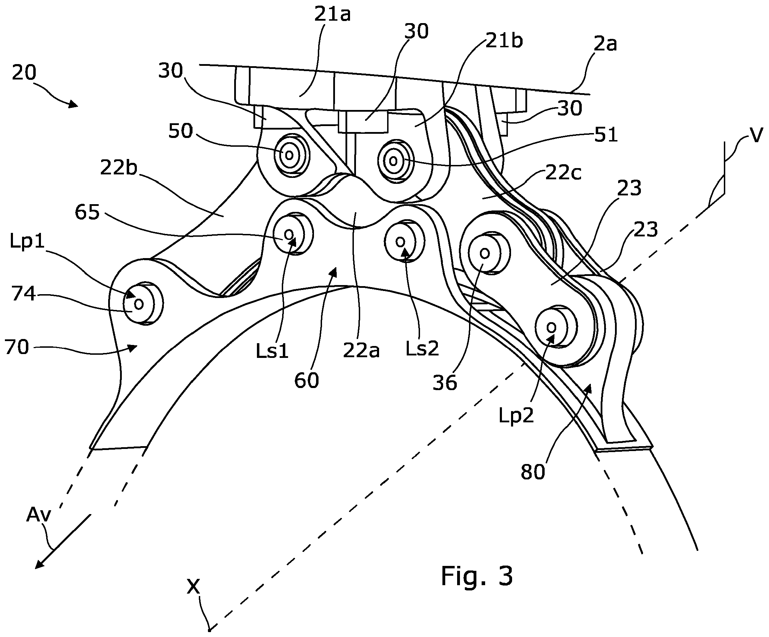

En relation avec les figures 2 à 4, la fixation du moteur 6 au mât 2 est assurée entre autre, à l'avant, par une attache moteur avant 10 et, à l'arrière, par une attache moteur arrière 20.

L'attache moteur arrière 20 comprend :
- un support 21 qui se fixe à la face inférieure 2a;
- une manille principale 22 qui s'étend dans un plan transversal et qui est fixée d'une part au support 21 et d'autre part au moteur 6 ;
- deux manilles deux points 23, dites manilles secondaires, identiques l'une de l'autre. Chaque manille secondaire 23 s'étend dans un plan transversal et est fixée d'une part à la manille principale 22 et d'autre part au moteur 6.

Selon l'invention, de chaque côté du plan vertical V, la manille principale 22 comprend, avec le moteur 6, une liaison principale Lp1, Lp2 et une liaison supplémentaire Lsl, Ls2 qui est activée uniquement en cas de rupture de la liaison principale Lp1, Lp2 située du même côté du plan vertical V. Les deux liaisons principales Lp1, Lp2 sont reparties symétriquement de part et d'autre du plan vertical V et les deux liaisons supplémentaires Lsl, Ls2, situées entre les deux points de liaisons principales Lp1, Lp2, sont également reparties symétriquement de part et d'autre du plan vertical V.

Le support 21 comprend une platine 21a qui présente une surface d'appui plaquée contre la face inférieure 2a du mât et qui est fixée à cette dernière. La fixation de la platine 21a au mât 2 s'effectue, par exemple, par l'utilisation de quatre vis de traction 30 à travers des alésages traversant 31 prévus à cet effet dans la platine 21a, avec deux alésages 31 de chaque côté du plan vertical V.

Le support 21 comprend en outre deux âmes 21b, réalisées d'un seul tenant avec la platine 21a, où chaque âme 21b s'étend dans un plan transversal et où les deux âmes 21b sont espacées l'une de l'autre selon l'axe longitudinal X.

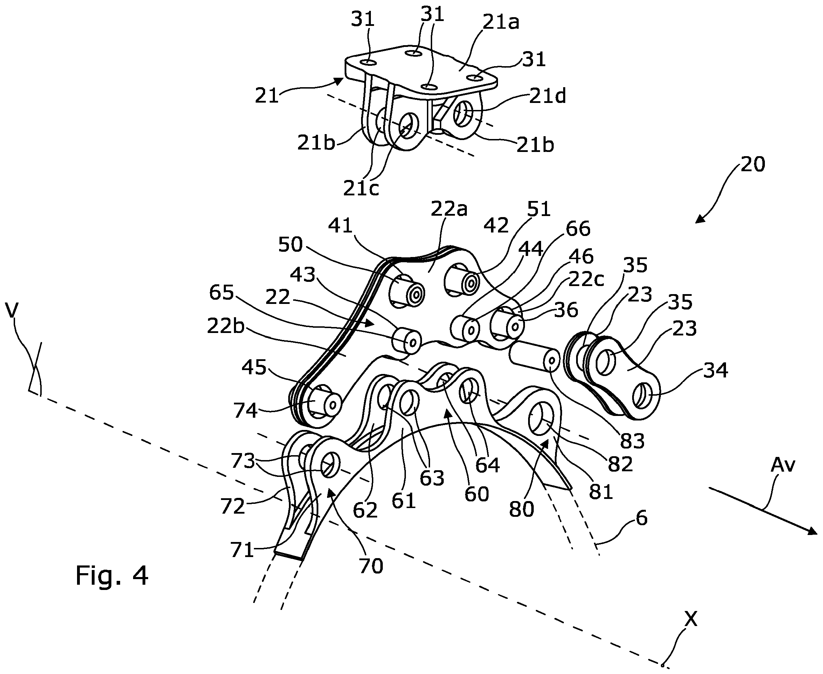

Plus particulièrement visible à la figure 4, chacune des deux âmes 21b comprend des premier et second trous de passage 21c, 21d, avec un premier trou de passage 21c d'un premier côté du plan vertical V, et un second trou de passage 21d d'un second côté du plan vertical V et symétrique du premier trou de passage 21c par rapport à ce même plan. Ainsi, le premier et second trous de passages 21c,21d de chaque âmes 21b sont alignés seront une direction transversale.

Chaque premier 21c, respectivement second 21d trou de passage d'une âme 21b est situé en regard d'un premier, respectivement second trou de passage de l'autre âme 21b. Le support 21 avec ses deux âmes 21b forme une chape pour recevoir la manille principale 22 dans l'espace entre les deux âmes 21b.

La manille principale 22 se présente sous la forme d'une plaque s'étendant dans un plan transversal et qui a des extrémités arrondies. Dans un plan transversal, la manille principale 22 comprend une partie centrale 22a approximativement rectangulaire avec quatre sommets arrondis; un prolongement long 22b de la partie centrale sur un premier côté de cette dernière et un prolongement court 22c de la partie centrale sur un second côté de cette dernière opposée au premier côté par rapport au plan vertical V. Le prolongement long 22b comme le prolongement court 22c présente chacun une extrémité libre arrondie.

La manille principale 22 comprend des premier 41, deuxième 42, troisième 43 et quatrième orifices 44, où chaque orifice est positionné au niveau d'un sommet arrondi de la partie centrale 22a. Par rapport au plan vertical V, le premier orifice 41 est le symétrique du deuxième orifice 42 et le troisième orifice 43 est symétrique du quatrième orifice 44. Un cinquième orifice 45 est positionné à l'extrémité libre du prolongement long 22b tandis qu'une sixième orifice 46 est positionné à l'extrémité libre du prolongement court 22c.

Chacun des deux manilles secondaires 23 a une forme oblong et présente une première extrémité arrondie au niveau de laquelle est positionnée un premier trou traversant 34 et une seconde extrémité arrondie au niveau de laquelle est positionnée un second trou traversant 35.

Au niveau de son prolongement court 22c, la manille principale 22 est enserrée par (c'est-à-dire prise en sandwich entre) les deux manilles secondaires 23. Un axe de liaison manille-manille 36 est inséré dans les seconds trous des deux manilles secondaires tout étant emmanché dans un palier à rotule (non représenté) inséré avec un ajustement serré dans le sixième orifice 46 de la manille principale 22.

Afin d'assurer sa fixation au support 21, la manille principale 22 est enserrée par les deux âmes 21b du support. Un premier axe de liaison support 50 est inséré dans les premier trous de passage 21c des âmes en traversant un palier à rotule (non représenté) inséré dans le premier orifice 41 de la manille principale 22. De manière symétrique par rapport au plan vertical V, un second axe de liaison support 51 est inséré dans les seconds trous de passage 21d des âmes 21b en étant emmanché dans un palier à rotule (non représenté) inséré dans le second l'orifice 42 de la manille principale 22. Les liaisons rotules entre le support 21 et la manille principale 22 autorisent, en utilisation, un débattement du moteur 6 fixé au mât 2 au moyen de l'attache moteur arrière 20.

Parmi les quatre points de liaisons Lp1,Lp2,Ls1, Ls2 de la manille principale 22 avec le moteur 6, trois points de liaisons Lpl,Lsl, Ls2 sont directs et un point de liaison Lp2 est indirect puisque, pour ce dernier, la manille principale 22 est fixée au moteur 6 par l'intermédiaire des deux manilles secondaires 23. L'utilisation de manilles secondaires 23 entre la manille principale 22 et le moteur 6 permet de reprendre des efforts de cisaillements engendrés par des mouvements du moteur 6.

Dans le détail, au niveau de sa partie centrale 22a, la manille principale 22 comprend deux points de liaison supplémentaire Ls1, Ls2 avec une première ferrure 60 solidaire du moteur. La première ferrure 60 se présente sous la forme d'une chape avec deux branches 61,62 où chaque branche 61,62 s'étend dans un plan transversal. Les branches 61,62 sont parallèles l'une de l'autre et espacées l'une de l'autre selon l'axe longitudinal X. Chaque branche 61, 62 présente un premier et un second alésage 63, 64 de dimensions identiques, ayant tous deux des axes d'alésages parallèles à l'axe longitudinal X et symétriques l'un de l'autre par rapport au plan vertical V.

Chaque premier, respectivement second alésage 63,64 d'une première branche 61 a un axe d'alésage commun avec le premier, respectivement second alésage 63, 64 de l'autre branche 62.

D'un côté de l'axe vertical V, un premier point de liaison supplémentaire Ls1 est une liaison avec jeu formée par l'insertion d'un premier axe de liaison moteur central 65 dans les premiers alésages 63 des deux branches 61,62 de la première ferrure 60, tout en étant emmanché dans un palier à rotule (non représenté) inséré avec jeu dans le troisième orifice 43 de la manille principale 22.

De l'autre côté de l'axe vertical V, un second point de liaison supplémentaire Ls2 est une liaison avec jeu formée par l'insertion d'un second axe de liaison moteur central 66 dans les seconds alésages 64 des deux branches 61,62 de la première ferrure 60, tout en étant emmanché dans un palier à rotule (non représenté) inséré avec jeu dans le quatrième orifice 44 de la manille principale 22.

Au niveau de son prolongement long 22b, la manille principale 22 comprend un premier point de liaison principal Lp1 avec une seconde ferrure 70 solidaire du moteur 6. La seconde ferrure 70 se présente sous la forme d'une chape avec deux branches 71,72, où chaque branche s'étend dans un plan transversal. Les branches 71,72 sont parallèles l'une de l'autre et espacées l'une de l'autre selon l'axe longitudinal X. Chacun des deux branches 71,72 présente un alésage traversant 73 avec un axe d'alésage parallèle à l'axe longitudinal X.

Les alésages 73 des deux branches 71, 72 de la seconde ferrure 70 sont identiques l'un à l'autre et ont un axe d'alésage commun.

Le premier point de liaison principal Lp1 est une liaison sans jeu formée par l'insertion d'un premier axe de liaison moteur latéral 74 dans les alésages 73 de la seconde ferrure, tout en étant emmanché dans un palier à rotule (non représenté) inséré avec un ajustement serré dans le cinquième orifice 45 de la manille principale 22.

De l'autre côté de l'axe vertical V, le prolongement court 22c de la manille principale 22 est prolongé par les manilles secondaires 23 fixées à la manille principale 22. Chacune des manilles secondaires 23 est fixée, au niveau de sa première extrémité, à une patte de fixation 80 solidaire du moteur. La patte de fixation 80 comprend une âme 81 s'étendant dans un plan transversal et qui présente un alésage 82 traversant avec un axe d'alésage parallèle à l'axe longitudinal X. L'alésage traversant 82 de la patte de fixation 80 est le symétrique, par rapport au plan vertical V, des alésages traversants 73 de la seconde ferrure 70. Dit autrement, la plus petite distance entre le plan vertical V et l'axe d'alésage des alésages 73 de la seconde ferrure 70 et égale à la plus petite distance entre le plan vertical V et l'axe d'alésage de l'alésage 82 de la patte de fixation 80.

Le second point de liaison principal Lp2 est une liaison sans jeu formée par l'insertion d'un second axe de liaison moteur latéral 83 dans les premiers trous traversants 34 des deux manilles secondaires 23 tout étant emmanché dans un palier à rotule (non représenté) inséré sans jeu dans l'alésage traversant 82 de la patte de fixation 80 qui est enserrée par les deux manilles secondaires 23.

En cas de fonctionnement nominal du premier point de liaison principal Lp1, il n'y a aucun contact entre le premier axe de liaison moteur central 65 et la première ferrure 60. En revanche, en cas de défaillance du premier point de liaison principal Lp1, le moteur 6 va se déplacer sous l'effet de son poids ce qui va provoquer un effacement du jeu dans la première liaison supplémentaire Ls1 qui est alors engagée et reprend les efforts du moteur 6.

De manière identique, en cas de fonctionnement nominal du second point de liaison principal Lp2, il n'y a aucun contact entre le second axe de liaison moteur central 66 et la première ferrure 60. En revanche, en cas de défaillance du second point de liaison principal Lp2, le moteur 6 va se déplacer sous l'effet de son poids ce qui va provoquer un effacement du jeu dans la seconde liaison supplémentaire Ls2 qui est alors engagée et reprend les efforts du moteur 6.

Contrairement à l'art antérieur dont l'ensemble de motorisation comprend une poutre transversale directement fixée à la face inférieure du mat et dimensionnée pour permettre l'agencement de trois points de liaisons poutre, l'ensemble de motorisation 1 selon l'invention comprend une attache arrière 20 comprenant une manille principale 22 fixée en quatre points de liaisons Lp1-2, Ls1-2 au moteur 6, et un support 21 pour relier la manille principale 22 à la face inférieure 2a du mât. Le support 21 est dimensionné pour supporter la manille principale 22 au moyen des deux axes de liaison support 50, 51 qui sont dimensionnés pour reprendre les efforts du moteur 6. Les deux axes de liaison support 50, 51 sont alignés selon une direction transversale ce qui permet de rendre l'attache moteur arrière 20 compacte selon une direction transversale.

L'attache moteur arrière 20 permet, et ce de manière similaire pour chaque côté du plan vertical V, d'engager un point de liaison supplémentaire Ls1, Ls2 proche d'un point de liaison principal rompu Lp1, Lp2 afin de maximiser le bras de levier pour la reprise du couple moteur au niveau de l'axe de liaison support 50, 51.

Du fait de la maximisation du bras de levier pour la reprise du couple moteur en cas de rupture d'un point de liaison principal Lp1, Lp2 et l'engagement du point de liaison supplémentaire Lsl, Ls2 d'un même côté du plan vertical, les diamètres des axes des liaisons supports 50,51 peuvent être optimisés afin de réduire leur encombrement. Par conséquent, il est possible de réduire les dimensions du support 21 selon la direction transversale et par conséquent la largeur de la face inférieure 2a du mat dans le but d'optimiser les performances aérodynamiques de ce dernier.

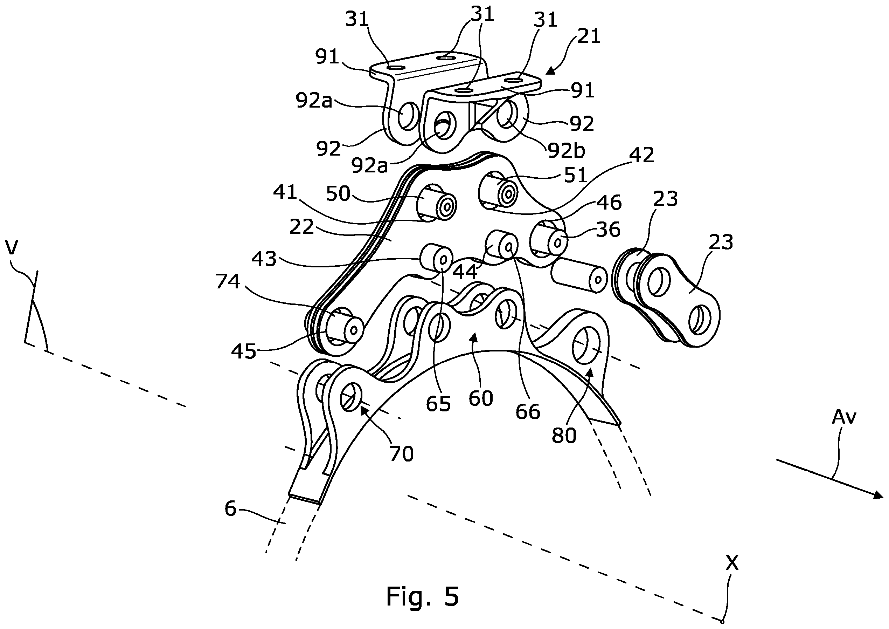

Selon un autre mode de réalisation représenté à la figure 5, le support 21 comprend deux platine 91 où chaque platine comprend une surface d'appui plaquée contre la face inférieure 2a du mât et fixée à cette dernière. La fixation de chaque platine 91 au mât 2 s'effectue par exemple, par l'utilisation de quatre vis de traction (non représentées à la figure 5) à travers d'alésages 31 traversant prévus à cet effet dans la platine 91, avec deux alésages de chaque côté du plan vertical.

Chaque platine 91 comprend une âme 92, réalisée d'un seul tenant avec la platine 91.

Chacune des deux âmes 92 comprend des premier et second trous de passage 92a, 92b, avec un premier trou de passage 92a d'un premier côté du plan vertical V, et un second trou de passage 92b d'un second côté du plan vertical V et symétrique du premier trou de passage 92a par rapport à ce même plan. Ainsi, les premier et second trous de passages 92a, 92b de chaque âme 92 sont alignés selon une direction transversale. Chaque premier 92a, respectivement second trou de passage 92b d'une âme 92 est situé en regard d'un premier, respectivement second trou de passage de l'autre âme. Le support 21 avec ses deux âmes 92 forme une chape pour recevoir la manille principale 22 dans l'espace entre les deux âmes 92.

Lorsque les deux platines 90 sont fixées au mat en position d'utilisation, les deux âmes 92 sont parallèles entre elles, espacées l'une de l'autre selon la plan longitudinal X et chacune est située dans un plan transversal. En outre, chaque premier, respectivement second trou 92a,b de passage d'une âme 92 est situé en regard d'un premier, respectivement second trou 92a,b de passage de l'autre âme 92.

Afin d'assurer sa fixation au support 21, la manille principale 22 est enserrée dans l'espace entre les deux âmes 92 du support 21. Un premier axe de liaison support 50 est inséré dans les premier trous de passage 92a des âmes 92 en traversant un palier à rotule (non représenté) inséré dans le premier orifice 41 de la manille principale 22 et un second axe de liaison support 51 est inséré dans les seconds trous de passage 92b des âmes 92 en étant emmanché dans un palier à rotule (non représenté) inséré dans le second orifice 42 de la manille principale 22.

## Revendications

1. Ensemble de motorisation (1) comprenant un mât (2) ayant une face inférieure (2a) et un moteur (6) entouré par une nacelle (5) s'étendant autour d'un axe longitudinal (X), le moteur (6) étant suspendu et fixé au mât (2) par une attache moteur avant (10), à l'avant du moteur (6), et une attache moteur arrière (20) à l'arrière du moteur (6), l'attache moteur arrière comprenant un support (21) fixé à la face inférieure (2a) du mât, une manille principale (22) s'étendant dans un plan orthogonal à l'axe longitudinal (X) et fixée d'une part au moteur (6) et d'autre part au support (21) par des premier et deuxième axes de liaison support (50,51) positionnés de manière symétrique par rapport à un plan vertical (V) parallèle à l'axe longitudinal (X), **caractérisé en ce que** de chaque côté du plan vertical (V) et agencés de manière symétrique par rapport audit plan (V), la manille principale (22) et le moteur (6) sont reliés l'un à l'autre par une liaison principale (Lp1, Lp2) et une liaison supplémentaire (Ls1, Ls2) activée uniquement en cas de rupture de la liaison principale (Lp1, Lp2), et **en ce que** les deux liaisons supplémentaires (Ls1, Ls2) sont situées entre les deux liaisons principales (Lp1, Lp2).

2. Ensemble de motorisation (1) selon la revendication 1, **caractérisé en ce que** chaque liaison principale (Lp1, Lp2) est une liaison sans jeu.

3. Ensemble de motorisation (1) selon la revendication 2, **caractérisé en ce que** chaque liaison supplémentaire (Lp1, Lp2) est une liaison avec jeu.

4. Ensemble de motorisation (1) selon l'une quelconque des revendications 1 à 3, **caractérisé en ce que** le support (21) comprend au moins une platine (21a, 91) fixée au mat (2) et présentant une surface d'appui plaquée contre la face inférieure (2a) du mat, ainsi que deux âmes (22b, 92) positionnées dans des plans orthogonaux à l'axe longitudinal (X) et espacées l'une de l'autre selon l'axe longitudinal (X), la manille principale (22) étant reçue dans l'espace entre les deux âmes (22b, 92), chacune des âmes (22b, 92) présentant des premier et deuxième trous de passage (21c-d, 92a-b) pour les premier et deuxième axes de liaison support (50, 51).

5. Ensemble de motorisation (1) selon l'une quelconque des revendications 1 à 4, **caractérisé en ce que** l'attache moteur arrière (20) comprenant deux manilles secondaires (23), ou chaque manille secondaire (23) s'étend dans un plan orthogonal à l'axe longitudinal (X) et est fixée d'une part au moteur (6) et d'autre part à la manille principale (22) par un axe de liaison manille-manille (36).

6. Ensemble de motorisation (1) selon la revendication 5, **caractérisé en ce que** le moteur comprend au moins une première ferrure (60), une seconde ferrure (70) et une patte de fixation (80), le seconde ferrure (70) et la patte de fixation (80) étant disposée de part et d'autre de la première ferrure (60), la manille principale (22) est reliée à la première ferrure (60) par un premier et un second axes de liaison moteur centraux (65,66) symétriques l'un de l'autre par rapport au plan vertical (V), reliée à la seconde ferrure (70) par un premier axe de liaison moteur latéral (74), et en outre reliée à la patte de fixation (80), par l'intermédiaire des manilles secondaires (23), par un second axe de liaison moteur latéral (83) symétrique du premier axe de liaison moteur latéral (74) par rapport au plan vertical (V).

7. Ensemble de motorisation (1) selon la revendication 6, **caractérisé en ce que** la manille principale (22) se présente sous la forme d'une plaque s'étendant dans un plan orthogonal à l'axe longitudinal (X) et comprenant six orifices (41-46) parmi lesquels des premier et deuxième orifices (41,42) pour loger les premier et deuxième axes de liaison support (50, 51), un troisième et un quatrième orifice (43, 44) pour loger les axes de liaison moteur centraux (65,66), un cinquième orifice (45) pour loger le premier axe de liaison moteur latéral (74) et un sixième orifice (46) pour loger l'axe de liaison manille-manille (36).

8. Ensemble de motorisation (1) selon la revendication 7, **caractérisée en ce que** la manille principale (22) comprend une partie centrale (22a) approximativement rectangulaire avec quatre sommets arrondis au niveau desquels sont positionnés les premier, deuxième troisième et quatrième orifices (41-44), un prolongement long (22b) à une extrémité libre duquel est positionné le cinquième orifice (45), ainsi qu'un prolongement court (22c), situé à l'opposé du prolongement long, à une extrémité libre duquel est positionné le sixième orifice (46).

## Patentansprüche

1. Motorisierungsbaugruppe (1), umfassend einen Mast (2) mit einer Unterseite (2a) und einem Motor (6), der von einer Gondel (5) umgeben ist, die sich um eine Längsachse (X) erstreckt, wobei der Motor (6) durch eine am Motorvorderteil (6) befindliche vordere Motorbefestigung (10) und eine am Motorhinterteil (6) befindliche hintere Motorbefestigung (20) am Mast (2) aufgehängt und befestigt ist, wobei die hintere Motorbefestigung eine an der Unterseite (2a) des Masts befestigte Halterung (21) umfasst, wobei sich ein Hauptbügel (22) in einer zur Längsachse (X) orthogonalen Ebene erstreckt und durch eine erste und eine zweite Halterungsverbindungsachse (50, 51), die relativ zu einer vertikalen Ebene (V) parallel zur Längsachse (X) symmetrisch angeordnet sind, einerseits am Motor (6) und andererseits an der Halterung (21) befestigt ist, **dadurch gekennzeichnet, dass** der Hauptbügel (22) und der Motor (6) auf jeder Seite der vertikalen Ebene (V) und relativ zur Ebene (V) symmetrisch angeordnet durch eine Hauptverbindung (Lp1, Lp2) und eine Zusatzverbindung (Ls1, Ls2), die nur im Fall eines Bruchs der Hauptverbindung (Lp1, Lp2) aktiviert wird, miteinander verbunden sind und dass sich die beiden Zusatzverbindungen (Ls1, Ls2) zwischen den beiden Hauptverbindungen (Lp1, Lp2) befinden.

2. Motorisierungsbaugruppe (1) nach Anspruch 1, **dadurch gekennzeichnet, dass** jede Hauptverbindung (Lp1, Lp2) eine spielfreie Verbindung ist.

3. Motorisierungsbaugruppe (1) nach Anspruch 2, **dadurch gekennzeichnet, dass** jede Zusatzverbindung (Lp1, Lp2) eine Verbindung mit Spiel ist.

4. Motorisierungsbaugruppe (1) nach einem der Ansprüche 1 bis 3, **dadurch gekennzeichnet, dass** die Halterung (21) zumindest eine am Mast (2) befestigte Platte (21a, 91) aufweist, die eine gegen die Mastunterseite (2a) gedrückte Auflagefläche und zwei Rippen (22b, 92) umfasst, die in den zur Längsachse (X) orthogonalen Ebenen positioniert und entlang der Längsachse (X) voneinander beabstandet sind, wobei der Hauptbügel (22) im Raum zwischen den beiden Rippen (22b, 92) aufgenommen ist, wobei jede der Rippen (22b, 92) ein erstes und ein zweites Durchgangsloch (21c-d, 92a- b) für die erste bzw. die zweite Halterungsverbindungsachse (50, 51) aufweist.

5. Motorisierungsbaugruppe (1) nach einem der Ansprüche 1 bis 4, **dadurch gekennzeichnet, dass** die hintere Motorbefestigung (20) zwei Hilfsbügel (23) umfasst, wobei sich jeder Hilfsbügel (23) in einer zur Längsachse (X) orthogonalen Ebene erstreckt und durch eine Bügel-Bügel-Verbindungsachse (36) einerseits am Motor (6) und andererseits am Hauptbügel (22) befestigt ist.

6. Motorisierungsbaugruppe (1) nach Anspruch 5, **dadurch gekennzeichnet, dass** der Motor zumindest einen ersten Beschlag (60), einen zweiten Beschlag (70) und eine Befestigungslasche (80) umfasst, wobei der zweite Beschlag (70) und die Befestigungslasche (80) auf beiden Seiten des ersten Beschlags (60) angeordnet sind, wobei der Hauptbügel (22) durch eine erste und eine zweite zentrale Motorverbindungsachse (65, 66), die relativ zur vertikalen Ebene (V) symmetrisch zueinander sind, mit dem ersten Beschlag (60) verbunden ist, durch eine erste seitliche Motoverbindungsachse (74) mit dem zweiten Beschlag (70) verbunden ist und ferner anhand der Hilfsbügel (23) durch eine zweite seitliche Motoverbindungsachse (83), die relativ zu vertikalen Ebene (V) symmetrisch zur ersten seitlichen Motoverbindungsachse (74) ist, mit der Befestigungslasche (80) verbunden ist.

7. Motorisierungsbaugruppe (1) nach Anspruch 6, **dadurch gekennzeichnet, dass** der Hauptbügel (22) die Form einer Platte aufweist, die sich in einer zur Längsachse (X) orthogonalen Ebene erstreckt und sechs Öffnungen (41 - 46) umfasst, darunter eine erste und eine zweite Öffnung (41, 42) zur Aufnahme der ersten bzw. zweiten Halterungsverbindungsachse (50, 51), eine dritte und eine vierte Öffnung (43, 44) zur Aufnahme der zentralen Motorverbindungsachsen (65, 66), eine fünfte Öffnung (45) zur Aufnahme der ersten seitlichen Motoverbindungsachse (74) und eine sechste Öffnung (46) zur Aufnahme der Bügel-Bügel-Verbindungsachse (36).

8. Motorisierungsbaugruppe (1) nach Anspruch 7, **dadurch gekennzeichnet, dass** der Hauptbügel (22) einen annähernd rechteckigen Mittelteil (22a) mit vier abgerundeten Scheiteln, an denen die erste, zweite, dritte und vierte Öffnung (41 - 44) positioniert sind, eine lange Verlängerung (22b), an deren freiem Ende die fünfte Öffnung (45) positioniert ist, sowie eine kurze Verlängerung (22c), die der langen Verlängerung gegenüberliegt und an deren freiem Ende die sechste Öffnung (46) positioniert ist, umfasst.

## Claims

1. Engine assembly (1) comprising a pylon (2) having a bottom face (2a) and an engine (6) surrounded by a nacelle (5) extending about a longitudinal axis (X), the engine (6) being suspended from and fixed to the pylon (2) by a front engine attachment (10), at the front of the engine (6), and a rear engine attachment (20) at the rear of the engine (6), the rear engine attachment comprising a support (21) fixed to the bottom face (2a) of the pylon, a main shackle (22) extending in a plane orthogonal to the longitudinal axis (X) and fixed on one side to the engine (6) and on the other side to the support (21) by first and second supporting link axes (50, 51) positioned symmetrically with respect to a vertical plane (V) parallel to the longitudinal axis (X), **characterized in that** on each side of the vertical plane (V) and arranged symmetrically with respect to said plane (V), the main shackle (22) and the engine (6) are linked to one another by a main link (Lp1, Lp2) and a supplementary link (Ls1, Ls2) activated only in case of breakage of the main link (Lp1, Lp2), and **in that** the two supplementary links (Ls1, Ls2) are situated between the two main links (Lp1, Lp2).

2. Engine assembly (1) according to Claim 1, **characterized in that** each main link (Lp1, Lp2) is a link without play.

3. Engine assembly (1) according to Claim 2, **characterized in that** each supplementary link (Lp1, Lp2) is a link without play.

4. Engine assembly (1) according to any one of Claims 1 to 3, **characterized in that** the support (21) comprises at least one mounting plate (21a, 91) fixed to the pylon (2) and having a bearing surface pressed against the bottom face (2a) of the pylon, and two web plates (22b, 92) positioned in planes orthogonal to the longitudinal axis (X) and spaced apart from one another on the longitudinal axis (X), the main shackle (22) being received in the space between the two web plates (22b, 92), each of the web plates (22b, 92) having first and second through-holes (21c-d, 92a-b) for the first and second supporting link axes (50, 51).

5. Engine assembly (1) according to any one of Claims 1 to 4, **characterized in that** the rear engine attachment (20) comprises two secondary shackles (23), wherein each secondary shackle (23) extends in a plane orthogonal to the longitudinal axis (X) and is fixed on one side to the engine (6) and on the other side to the main shackle (22) by a shackle-shackle link axis (36).

6. Engine assembly (1) according to Claim 5, **characterized in that** the engine comprises at least one first fitting (60), one second fitting (70) and a fixing lug (80), the second fitting (70) and the fixing lug (80) being disposed on either side of the first fitting (60), the main shackle (22) is linked to the first fitting (60) by a first and a second central engine link axis (65, 66) that are symmetrical to one another with respect to the vertical plane (V), linked to the second fitting (70) by a first lateral engine link axis (74), and also linked to the fixing lug (80) via secondary shackles (23), by a second lateral engine link axis (83) symmetrical to the first lateral engine link axis (74) with respect to the vertical plane (V).

7. Engine assembly (1) according to Claim 6, **characterized in that** the main shackle (22) takes the form of a plate extending in a plane orthogonal to the longitudinal axis (X) and comprising six orifices (41-46) including first and second orifices (41, 42) for accommodating the first and second supporting link axes (50, 51), a third orifice and a fourth orifice (43, 44) for accommodating the central engine link axes (65, 66), a fifth orifice (45) for accommodating the first lateral engine link axis (74) and a sixth orifice (46) for accommodating the shackle-shackle link axis (36).

8. Engine assembly (1) according to Claim 7, **characterized in that** the main shackle (22) comprises a central part (22a) that is substantially rectangular with four rounded vertices where the first, second, third and fourth orifices (41-44) are positioned, a long extension (22b) at a free end of which the fifth orifice (45) is positioned, and a short extension (22c), situated opposite the long extension, at a free end of which the sixth orifice (46) is positioned.
